(19)

**Europäisches Patentamt**
**European Patent Office**
**Office européen des brevets**

(11) **EP 4 379 833 A1**

(12) **EUROPEAN PATENT APPLICATION**
published in accordance with Art. 153(4) EPC

(43) Date of publication:
**05.06.2024 Bulletin 2024/23**

(21) Application number: **22849104.9**

(22) Date of filing: **27.06.2022**

(51) International Patent Classification (IPC):
*H01M 4/13* (2010.01)     *H01M 4/139* (2010.01)
*H01M 4/36* (2006.01)     *H01M 4/38* (2006.01)
*H01M 4/48* (2010.01)     *H01M 4/58* (2010.01)
*H01M 10/052* (2010.01)    *H01M 10/0567* (2010.01)
*H01M 10/058* (2010.01)

(52) Cooperative Patent Classification (CPC):
H01M 4/13; H01M 4/139; H01M 4/36; H01M 4/38;
H01M 4/48; H01M 4/58; H01M 10/052;
H01M 10/0566; H01M 10/0567; H01M 10/058;
Y02E 60/10; Y02P 70/50

(86) International application number:
**PCT/JP2022/025464**

(87) International publication number:
**WO 2023/008032 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.07.2021   JP 2021123372**

(71) Applicant: SHIN-ETSU CHEMICAL CO., LTD.
Tokyo 1000005 (JP)

(72) Inventors:
• HIROSE, Takakazu
  Annaka-shi, Gunma 379-0125 (JP)

• KIYOMORI, Ayumu
  Joetsu-shi, Niigata 942-8601 (JP)
• AOKI, Shotaro
  Joetsu-shi, Niigata 942-8601 (JP)
• KANESATO, Shuhei
  Tokyo 100-0005 (JP)
• SAKAI, Reiko
  Annaka-shi, Gunma 379-0125 (JP)

(74) Representative: Sonnenhauser, Thomas Martin
Wuesthoff & Wuesthoff
Patentanwälte und Rechtsanwalt PartG mbB
Schweigerstraße 2
81541 München (DE)

(54) **NEGATIVE ELECTRODE, LITHIUM ION SECONDARY BATTERY, AND MANUFACTURING METHOD FOR LITHIUM ION SECONDARY BATTERY**

(57)     The present invention is a negative electrode including negative electrode active material particles, wherein the negative electrode was charged at least once, the negative electrode active material particles contain silicon oxide particles coated with a carbon layer, and the silicon oxide particles contain $Li_2SiO_3$ in at least a part thereof, outermost surfaces of the negative electrode active material particles are covered with a composite coating containing Si, O, C, and H, and a TOF-SIMS spectrum of a surface of the negative electrode active material particles obtained by time-of-flight secondary ion mass spectrometry has at least one negative secondary ion peak of a peak attributed to $SiHO_3^-$, a peak attributed to $SiO_2CH_3^-$, and a peak attributed to $SiOCH_3^-$. This can provide: a negative electrode that can achieve sufficient battery cycle characteristics while containing a silicon-based negative electrode material; a lithium-ion secondary battery having this negative electrode; and a method for manufacturing this lithium-ion secondary battery.

[FIG. 5]

EP 4 379 833 A1

**Description**

TECHNICAL FIELD

The present invention relates to a negative electrode, a lithium-ion secondary battery, and a method for manufacturing a lithium-ion secondary battery.

BACKGROUND ART

Small-sized electronic devices represented by mobile terminals and so forth have been widespread in recent years, and further miniaturizing, lightweight property, and longer lifetime are strongly demanded. For such market demands, in particular, development of small-sized and lightweight secondary batteries that can yield a high energy density is in progress. It is investigated that this secondary battery is applied not only the small-sized electronic devices but also large-sized electronic devices represented by automobiles and for power storage systems represented by houses.

Among these, a lithium-ion secondary battery has been promising because the lithium-ion secondary battery has a small size, easily has an increased capacity, and can yield a higher energy density than a lead battery and a nickel-cadmium battery.

The above lithium-ion secondary battery has a positive electrode, a negative electrode, a separator, and an electrolyte liquid, and the negative electrode contains a negative electrode active material, which is involved with charge-discharge reactions.

For this negative electrode active material, a carbon-based active material is widely used, and meanwhile, the recent market demands have required further increase in a battery capacity. For increasing the battery capacity, use of silicon as a material for the negative electrode active material is investigated. This is because a theoretical capacity of silicon (4199 mAh/g) is ten times or more higher than a theoretical capacity of graphite (372 mAh/g), and thereby remarkable increase in the battery capacity is expected. Development of the silicon material as the material for the negative electrode active material is investigated on not only a single substance of a silicon but also compounds and so forth represented by an alloy and an oxide. A form of the active material is investigated from an applying type, which is standard in the carbon-based active material, to an integrated type in which the active material is directly deposited on a current collector.

However, when silicon is used as a main raw material of the negative electrode active material, the negative electrode active material is to expand and contract during charge and discharge, easily leading to cracking mainly near a surface layer of the negative electrode active material. Furthermore, an ionic substance is to be generated inside the active material, thereby the active material is to be easy to crack. On cracking of the surface layer of the negative electrode active material, a new surface is generated to increase a reaction area of the active material. In this time, a decomposition reaction of the electrolyte liquid occurs on the new surface, and a coating, which is a decomposed product of the electrolyte liquid, is formed on the new surface to consume the electrolyte liquid. Therefore, cycle characteristics are likely to be deteriorated.

To improve initial efficiency and cycle characteristics of the battery, various investigations have been made so far on a negative electrode material mainly containing the silicon material and electrode structure for a lithium-ion secondary battery.

Specifically, for a purpose of obtaining good cycle characteristics and high safety, silicon and amorphous silicon dioxide are simultaneously deposited by using a gas phase method (for example, see Patent Document 1). To obtain a high battery capacity and safety, a carbon material (electron-conducting material) is provided on a surface layer of a silicon oxide particle (for example, see Patent Document 2). Furthermore, to improve the cycle characteristics and to obtain high input-and-output characteristics, an active material containing silicon and oxygen is produced to form an active material layer having a high oxygen ratio near a current collector (for example, see Patent Document 3). To improve the cycle characteristics, oxygen is contained in a silicon active material to form an active material layer so that an average oxygen content is 40 at% or less and so that an oxygen content is larger near a current collector (for example, see Patent Document 4).

As an electrolyte liquid additive to inhibit decomposition reactions of the electrolyte liquid accompanied with charge and discharge of the silicon active material, use of fluoroethylene carbonate (FEC) is reported (see Patent Document 5, for example). Since the fluorine-based electrolyte liquid forms a stable solid electrolyte interphase (SEI) film on a silicon surface, such an electrolyte liquid can inhibit deterioration of the silicon material.

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2006-134719 A

SUMMARY OF INVENTION

TECHNICAL PROBLEM

As noted above, in recent years, improvement of performance and higher functionalization of small electronic devices, such as, typically, mobile terminals, are in progress, and a lithium-ion secondary battery, which is a main power source therefor, is required to have an increased battery capacity. Desired as one solution for this problem is development of a lithium-ion secondary battery having a negative electrode using a silicon material as a main material. The lithium-ion secondary battery using the silicon material is desired to have cycle characteristics comparable to those of a lithium-ion secondary battery using a carbon-based active material. In this circumstance, a fluorine-based additive has been developed, and the battery characteristics have tended to be improved. However, repeated charge and discharge consume the fluorine-based solvent to increase a decomposed product of the electrolyte liquid deposited on a surface of the silicon material, and lithium moving reversibly is deactivated with incorporation into the decomposed product, and thereby not only deterioration of the battery cycle characteristics, but also battery cell inflation may be occurred. That is, the battery characteristics are insufficient compared with characteristics of a battery using the carbon-based active material.
The present invention been made in view of the above problems. An object of the present invention is to provide: a negative electrode that can achieve sufficient battery cycle characteristics while using the silicon-based negative electrode material; a lithium-ion secondary battery having this electrode; and a method for manufacturing this lithium-ion secondary battery.

SOLUTION TO PROBLEM

To solve the above problem, the present invention provides a negative electrode comprising negative electrode active material particles, wherein

the negative electrode was charged at least once,
the negative electrode active material particles contain silicon oxide particles coated with a carbon layer, and the silicon oxide particles contain $Li_2SiO_3$ in at least a part thereof,
outermost surfaces of the negative electrode active material particles are covered with a composite coating containing Si, O, C, and H, and
a TOF-SIMS spectrum of a surface of the negative electrode active material particles obtained by time-of-flight secondary ion mass spectrometry has at least one negative secondary ion peak of a peak attributed to $SiHO_3^-$, a peak attributed to $SiO_2CH_3^-$, and a peak attributed to $SiOCH_3^-$.

The inventive negative electrode contains the negative electrode active material particles containing the silicon compound particles, and thereby the battery capacity can be improved. By containing $Li_2SiO_3$, which is a Li silicate, in at least a part of the silicon compound particles, a slurry before applying can be stabilized, and a good electrode can be obtained and battery characteristics such as first efficiency can be improved.
Furthermore, the outermost surfaces of the negative electrode active material particles are coated with the composite coating containing Si, O, C, and H, and the TOF-SIMS spectrum of the surface of the negative electrode active material particles obtained by time-of-flight secondary ion mass spectrometry has at least one negative secondary ion peak of the peak attributed to $SiHO_3^-$, the peak attributed to $SiO_2CH_3^-$, and the peak attributed to $SiOCH_3^-$. By virtue of these feature, excessive decomposition of the electrolyte liquid accompanied with change in the Li silicate can be inhibited.
As a result, the inventive negative electrode can achieve sufficient battery cycle characteristics while using the silicon-based negative electrode material, and can inhibit the battery inflation.

It is preferably that, before the negative electrode active material particles are charged and discharged, the negative electrode active material particles have a peak derived from a Si (111) crystal plane obtained by X-ray diffraction using Cu-K$\alpha$ ray, a crystallite size corresponding to the crystal plane is 5.0 nm or less, and a ratio A/B of an intensity A of the peak derived from the Si (111) crystal plane relative to an intensity B of a peak derived from a $Li_2SiO_3$ (111) crystal plane preferably satisfies the following formula (1),

$$0.4 \leq A/B \leq 1.0 \quad ...(1).$$

Such negative electrode active material particles can exhibit high slurry stability without impairing easiness of conversion from $Li_2SiO_3$ into $Li_4SiO_4$. Thus, the negative electrode containing such negative electrode active material particles can achieve more excellent battery characteristics.

A median diameter of the negative electrode active material particles is desirably 5.5 um or more and 15 $\mu$m or less.

The median diameter of the negative electrode active material particles within this range can prevent promotion of the reaction with the electrolyte liquid, and can prevent failure of electron contacting due to the expansion of the active material accompanied with charge and discharge.

In addition, the present invention also provides a lithium-ion secondary battery, comprising:

the inventive negative electrode;
a positive electrode; and
a non-aqueous electrolyte liquid.

The inventive lithium-ion secondary battery comprises the inventive negative electrode, and thereby the inventive lithium-ion secondary battery can exhibit sufficient battery cycle characteristics while using the silicon-based negative electrode material, and can inhibit the battery inflation.

The non-aqueous electrolyte liquid preferably comprises:

a non-aqueous solvent;
an electrolyte salt dissolved in the non-aqueous solvent; and
a silane compound represented by the following general formula (2),

$$Si(R^1)_l(R^2)_m(R^3)_n(R^4)_{4-l-m-n} \quad\quad (2)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$.

The silane compound represented by the formula (2) can easily form the composite coating containing Si, O, C, and H covering the outermost surfaces of the negative electrode active material particles with once or more charge of the negative electrode.

In addition, the present invention also provides a method for manufacturing a lithium-ion secondary battery comprising: a negative electrode containing negative electrode active material particles; a positive electrode; and a non-aqueous electrolyte liquid, wherein

the negative electrode active material particles are to be particles containing silicon oxide particles coated with a carbon layer, the silicon oxide particles containing $Li_2SiO_3$ in at least a part thereof,
the non-aqueous electrolyte liquid is to be a liquid comprising:

a non-aqueous solvent;
an electrolyte salt dissolved in the non-aqueous solvent; and
a silane compound represented by the following general formula (2),

$$Si(R^1)_l(R^2)_m(R^3)_n(R^4)_{4-l-m-n} \quad\quad (2)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$, and the method comprises steps of:

> assembling a battery unit comprising the negative electrode, the positive electrode, and the non-aqueous electrolyte liquid; and
> forming a coating on a surface of the negative electrode active material particles by charging the battery unit at least once.

According to the inventive method for manufacturing a lithium-ion secondary battery as above, the inventive lithium-ion secondary battery can be manufactured.

In addition, the inventive negative electrode can also be obtained by disassembling the manufactured inventive lithium-ion secondary battery and taking out the negative electrode.

It is preferably that, in assembling the battery unit, used is the negative electrode containing the negative electrode active material particles, wherein, before the negative electrode active material particles are charged and discharged, the negative electrode active material particles have a peak derived from a Si (111) crystal plane obtained by X-ray diffraction using Cu-K$\alpha$ ray, a crystallite size corresponding to the crystal plane is 5.0 nm or less, and a ratio A/B of an intensity A of the peak derived from the Si (111) crystal plane relative to an intensity B of a peak derived from a $Li_2SiO_3$ (111) crystal plane satisfies the following formula (1),

$$0.4 \leq A/B \leq 1.0 \quad ...(1).$$

By using the negative electrode containing such negative electrode active material particles, high slurry stability can be exhibited without impairing easiness of conversion from $Li_2SiO_3$ into $Li_4SiO_4$. Thus, by using such negative electrode active material particles, the lithium-ion secondary battery exhibiting more excellent battery characteristics can be manufactured.

In forming the coating on the surface of the negative electrode active material particles, the battery unit is preferably charged so that a potential of the negative electrode is within a range of 0.4 V to 0.5 V vs Li/Li$^+$.

By forming the coating at such a potential of the negative electrode, the better coating can be obtained.

ADVANTAGEOUS EFFECTS OF INVENTION

As noted above, the inventive negative electrode can achieve sufficient battery cycle characteristics while using the silicon-based negative electrode material, and can inhibit the battery inflation.

The inventive negative electrode can also yield high first efficiency and a high capacity.

The inventive lithium-ion secondary battery can exhibit sufficient battery cycle characteristics while using the silicon-based negative electrode material, and can inhibit the battery inflation.

According to the inventive method for manufacturing a lithium-ion secondary battery, the inventive lithium-ion secondary battery can be manufactured.

Furthermore, the inventive negative electrode can be easily manufactured by taking out the negative electrode from the lithium-ion secondary battery manufactured by the inventive method for manufacturing a lithium-ion secondary battery.

BRIEF DESCRIPTION OF DRAWINGS

> FIG. 1 is a schematic cross-sectional view illustrating an example of the inventive negative electrode.
> FIG. 2 is a schematic cross-sectional view illustrating an example of the inventive lithium-ion secondary battery.
> FIG. 3 is a TOF-SIMS spectrum of a surface of negative electrode active material particles contained in a negative electrode of a lithium-ion secondary battery of Example 2.
> FIG. 4 is an enlarged view of a part of the TOF-SIMS spectrum in FIG. 3.
> FIG. 5 is an enlarged view of a part of the TOF-SIMS spectrum in FIG. 3.
> FIG. 6 is an enlarged view of a part of the TOF-SIMS spectrum in FIG. 3.
> FIG. 7 is an enlarged view of a part of the TOF-SIMS spectrum in FIG. 3.

FIG. 8 is an enlarged view of a part of the TOF-SIMS spectrum in FIG. 3.
FIG. 9 is an XRD chart of negative electrode active material particles used in Example 12.

DESCRIPTION OF EMBODIMENTS

As described above, it has been investigated as one measures to increase a battery capacity of a lithium-ion secondary battery to use, as a negative electrode of the lithium-ion secondary battery, a negative electrode using silicon oxide as a main material. This lithium-ion secondary battery using the silicon oxide is desired to have initial charge-discharge characteristics comparable to those of a lithium-ion secondary battery using a carbon-based active material. In addition, a Li-doped SiO that can improve the initial charge-and-discharge characteristics is desired to have cycle characteristics comparable to those of the carbon-based active material. However, the negative electrode active material exhibiting battery characteristics equivalent to those of the carbon-based active material when used as a negative electrode active material of the lithium-ion secondary battery has not been proposed yet.

The present inventors have made earnest study to obtain a negative electrode that can exhibit high cycle characteristics, improve the initial charge-and-discharge characteristics, and consequently increase a battery capacity, when used as a negative electrode active material of a secondary battery. The present inventors consequently found that sufficient battery cycle characteristics can be achieved and battery inflation can be inhibited while using the silicon-based negative electrode material by a negative electrode comprising negative electrode active material particles, wherein the negative electrode active material particles contain silicon oxide particles coated with a carbon layer, and the silicon oxide particles contain $Li_2SiO_3$ in at least a part thereof, outermost surfaces of the negative electrode active material particles are covered with a composite coating containing Si, O, C, and H, and a TOF-SIMS spectrum of a surface of the negative electrode active material particles obtained by time-of-flight secondary ion mass spectrometry has a peak derived from the composite coating. This finding has led to completion of the present invention.

That is, the present invention is a negative electrode comprising negative electrode active material particles, wherein

the negative electrode was charged at least once,
the negative electrode active material particles contain silicon oxide particles coated with a carbon layer, and the silicon oxide particles contain $Li_2SiO_3$ in at least a part thereof,
outermost surfaces of the negative electrode active material particles are covered with a composite coating containing Si, O, C, and H, and
a TOF-SIMS spectrum of a surface of the negative electrode active material particles obtained by time-of-flight secondary ion mass spectrometry has at least one negative secondary ion peak of a peak attributed to $SiHO_3^-$, a peak attributed to $SiO_2CH_3^-$, and a peak attributed to $SiOCH_3^-$.

In addition, the present invention is a lithium-ion secondary battery comprising:

the inventive negative electrode;
a positive electrode; and
a non-aqueous electrolyte liquid.

Furthermore, the present invention is a method for manufacturing a lithium-ion secondary battery comprising: a negative electrode containing negative electrode active material particles; a positive electrode; and a non-aqueous electrolyte liquid, wherein

the negative electrode active material particles are to be particles containing silicon oxide particles coated with a carbon layer, the silicon oxide particles containing $Li_2SiO_3$ in at least a part thereof,
the non-aqueous electrolyte liquid is to be a liquid comprising:

a non-aqueous solvent;
an electrolyte salt dissolved in the non-aqueous solvent; and
a silane compound represented by the following general formula (2),

$$Si(R^1)_l(R^2)_m(R^3)_n(R^4)_{4-l-m-n} \qquad (2)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$

represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$, and the method comprises steps of:

assembling a battery unit comprising the negative electrode, the positive electrode, and the non-aqueous electrolyte liquid; and
forming a coating on a surface of the negative electrode active material particles by charging the battery unit at least once.

Hereinafter, the present invention will be described in detail, but the present invention is not limited thereto.

<Negative Electrode>

The inventive negative electrode may be used for, for example, a non-aqueous electrolyte secondary battery, specifically may be used for a lithium-ion secondary battery. Thus, the inventive negative electrode may also be called as a negative electrode for a non-aqueous electrolyte secondary battery, or a negative electrode for a lithium-ion secondary battery.

The inventive negative electrode contains the negative electrode active material particles. The negative electrode active material particles can occlude and release lithium ions.

These negative electrode active material particles contain the silicon oxide particles. This silicon oxide is coated with a carbon layer. The silicon oxide particles contain $Li_2SiO_3$ in at least a part thereof.

The inventive negative electrode is a negative electrode having been charged at least once, and thereby outermost surfaces of the negative electrode active material particles are covered with a composite coating containing Si, O, C, and H. In addition, in the inventive negative electrode, a TOF-SIMS spectrum of a surface of the negative electrode active material particles obtained by time-of-flight secondary ion mass spectrometry has at least one negative secondary ion peak of a peak attributed to $SiHO_3^-$, a peak attributed to $SiO_2CH_3^-$, and a peak attributed to $SiOCH_3^-$.

The inventive negative electrode contains the negative electrode active material particles containing the silicon oxide particles (hereinafter, also referred to as "silicon-based negative electrode active material particles") as noted above, and thereby the battery capacity can be improved. Furthermore, by forming $Li_2SiO_3$, which is a Li silicate, in the silicon oxide particles, a slurry before applying can be stabilized to yield a good electrode, and the battery characteristics are improved.

This $Li_2SiO_3$ is electrochemically active, and has a structure to contribute to charge and discharge. In this case, $Li_2SiO_3$ finally changes to $Li_4SiO_4$ with repeated charge and discharge, but in this process, a main solvent or a salt in an electrolyte liquid is decomposed, leading to deterioration as the battery.

Thus, in the inventive negative electrode, the outermost surfaces of the negative electrode active material particles containing the Li silicate portion and the silicon portion are coated with the composite coating containing Si, O, C, and H. This coating can inhibit excessive decomposition of the electrolyte liquid accompanied with change in the Li silicate.

Particularly, the negative electrode in which the TOF-SIMS spectrum of the surface of the negative electrode active material particles obtained by time-of-flight secondary ion mass spectrometry has at least one negative secondary ion peak of a peak attributed to $SiHO_3^-$, a peak attributed to $SiO_2CH_3^-$, and a peak attributed to $SiOCH_3^-$ can more certainly yield the above effect. That is, the Li silicate in the bulk is necessarily converted with charge and discharge, but the negative electrode having the coating exhibiting the above peak in the TOF-SIMS spectrum inhibits the excessive decomposition of the non-aqueous electrolyte liquid, which occurs during the silicate conversion, and thereby the stable state can be retained. Such a coating can be obtained with a silane compound represented by the general formula (2), as described later.

As a result of the above, the inventive negative electrode can achieve sufficient battery cycle characteristics while using the silicon-based negative electrode material, and can inhibit the battery inflation.

The TOF-SIMS spectrum of the surface of the negative electrode active material particles is obtained by time-of-flight secondary ion mass spectrometry using TOF-SIMS 5, manufactured by ION-TOF GmbH, for example. An example of the conditions is described below.

Mass range (m/z): 0 to 1500
Raster size: 300 $\mu$m
Number of scanning: 16
Number of pixels: 256
Vacuum degree: $4 \times 10^{-7}$ Pa or less
Primary ion species: $Bi_3^{++}$

Acceleration voltage: 30 kV
Pulse width: 12.5 ns
High mass resolution measurement: present
Charge neutralization: absent
Post acceleration: 9.5 kV

The battery is disassembled in an Ar atmosphere, and measured without air open.

Hereinafter, a specific example of structure of the inventive negative electrode will be described with reference to the drawings.

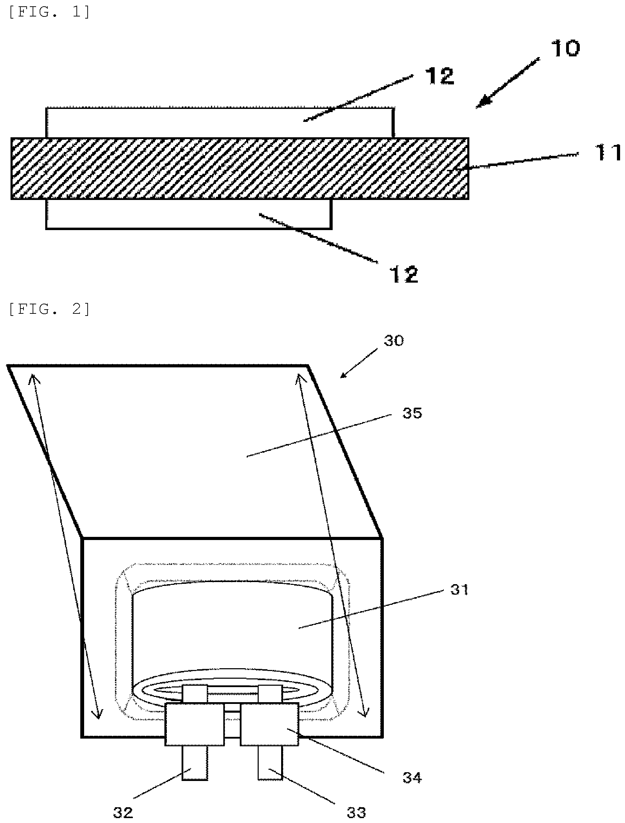

FIG. 1 schematically illustrates a cross-sectional view of an example of the inventive negative electrode. As illustrated in FIG. 1, a negative electrode 10 has structure having a negative electrode current collector 11 and a negative electrode active material layer 12 provided on a surface of this negative electrode current collector 11. This negative electrode active material layer 12 may be provided on both surfaces of the negative electrode current collector 11 as illustrated in FIG. 1, or may be provided on only one surface thereof.

Hereinafter, each of the negative electrode current collector 11 and the negative electrode active material layer 12 will be described.

[Negative Electrode Current Collector]

The negative electrode current collector 11 is composed of a material having excellent conductivity and being superior in mechanical strength. Examples of the conductive material usable for the negative electrode current collector 11 include copper (Cu) and nickel (Ni). This conductive material is preferably a material that does not form an intermetallic compound with lithium (Li) .

The negative electrode current collector 11 preferably contains carbon (C) and sulfur (S) in addition to the main elements. This is because physical strength of the negative electrode current collector is improved. Particularly, when an active material layer expanding during charge is contained, the current collector containing the above element yields an effect of inhibiting deformation of the electrode having the current collector. A content of the above contained elements is not particularly limited, but preferably each 100 mass-ppm or less. This is because a higher effect of inhibiting the deformation can be obtained. Such an effect of inhibiting deformation can further improve the cycle characteristics.

A surface of the negative electrode current collector 11 may be roughened, or may not be roughened. Examples of the roughened negative electrode current collector include a metal foil subjected to an electrolytic treatment, an emboss treatment, or a chemical etching treatment. Examples of the unroughened negative electrode current collector include a rolled metal foil.

[Negative Electrode Active Material Layer]

The negative electrode active material particles described above are contained in, for example, the negative electrode active material layer 12. The negative electrode active material layer 12 may further contain other materials such as a negative electrode binding agent (binder) and a conductive auxiliary from the viewpoint of battery design.

The negative electrode active material layer 12 may contain a mixed material of the negative electrode active material containing the negative electrode active material (the silicon-based negative electrode active material) particles and a carbon-base active material. This mixed material can reduce electric resistance of the negative electrode active material layer, and can relax expansion stress accompanied with charge. Examples of the usable carbon-base active material include pyrolytic carbons, cokes, glass-like carbon fibers, organic polymer compound calcined products, and carbon blacks.

As described above, the negative electrode active material particles contain the silicon oxide particles, and the silicon oxide particles are the silicon oxide material containing the silicon compound containing oxygen.

A ratio between silicon and oxygen to constitute this silicon oxide is preferably a ratio satisfying a range of $SiO_x$: $0.8 \leq x \leq 1.2$. "x" of 0.8 or more, which indicates an increased oxygen ratio compared with a single substance of silicon, yields good cycle characteristics. "x" of 1.2 or less is preferable because resistance of the silicon oxide becomes not excessively high. Particularly, the composition of $SiO_x$ having "x" of closer to 1 is more preferable. This is because high cycle characteristics are obtained. It should be noted that the composition of the silicon compound in the present invention does not necessarily means a purity of 100%, and the silicon compound may contain a trace amount of impurity elements.

These silicon oxide particles contain Li, and at least a part thereof forms $Li_2SiO_3$ (Li silicate). This $Li_2SiO_3$ contains a crystalline portion but is active against charge and discharge, and changes into $Li_4SiO_4$ by repeated charge and discharge.

The silicon oxide particles desirably do not contain crystalline Si as possible. By virtue of no containing crystalline Si, reactivity with the electrolyte liquid can be reduced, and consequently deterioration of the battery characteristics can be inhibited.

A crystallite size corresponding to a Si (111) plane is desirably 5.0 nm or less, and substantially amorphous is desirably.

In this time, $Li_2SiO_3$ can also exhibit crystallinity. $Li_2SiO_3$ exhibiting higher crystallinity has more stable structure, but has higher resistance. Meanwhile, $Li_2SiO_3$ with low crystallinity is easily eluted into a slurry. Thus, there is an optimal range.

An enlargement degree of the Li silicate and a crystalline degree of Si can be confirmed by XRD.

As the X-ray diffraction apparatus, D8 ADVANCE, manufactured by Bruker AXS GmbH., may be used, for example. The conditions are, for example, as follows: the X-ray source is Cu $K\alpha$ ray, a Ni filter is used, and the measurement is performed at an output of 40 kV / 40 mA, a slit width of 0.3°, a step width of 0.008°, and a range of 10 to 40° with a counting time per step of 0.15 seconds.

Before the negative electrode active material particles are charged and discharged, the negative electrode active material particles preferably have a peak derived from a Si (111) crystal plane obtained by X-ray diffraction using Cu-K$\alpha$ ray, a crystallite size corresponding to the crystal plane is preferably 5.0 nm or less, and a ratio A/B of an intensity A of the peak derived from the Si (111) crystal plane relative to an intensity B of a peak derived from a $Li_2SiO_3$ (111) crystal plane preferably satisfies the following formula (1),

$$0.4 \leq A/B \leq 1.0 \quad ...(1).$$

Such negative electrode active material particles can exhibit high slurry stability without impairing easiness of conversion from $Li_2SiO_3$ into $Li_4SiO_4$. Thus, the negative electrode containing such negative electrode active material particles can achieve more excellent battery characteristics.

The negative electrode active material particles desirably have a median diameter of 5.5 $\mu$m or more and 15 um or less.

The median diameter of the negative electrode active material particles within this range can prevent promotion of the reaction with the electrolyte liquid, and can prevent failure of electron contacting due to the expansion of the active material with charge and discharge.

As the negative electrode binding agent contained in the negative electrode active material layer 12, any one or more of polymer materials, synthetic rubbers, etc. may be used, for example. Examples of the polymer material include polyvinylidene fluoride, a polyimide, a polyamideimide, an aramid, polyacrylic acid, lithium polyacrylate, sodium polyacrylate, and carboxymethylcellulose. Examples of the synthetic rubber include a styrene-butadiene-based rubber, a fluorine-based rubber, and ethylene-propylene-diene.

As the negative electrode conductive auxiliary, any one or more of carbon materials such as carbon black, acetylene black, graphite, Ketjenblack, carbon nanotube, and carbon nanofiber may be used, for example.

The negative electrode active material layer 12 is formed with an application method, for example. The application method is a method in which the above negative electrode active material particles, the above binding agent, etc., and as necessary, the conductive auxiliary and the carbon-based active material are mixed, and then the mixture is dispersed in an organic solvent, water, etc. and applied.

The inventive negative electrode can be obtained by, for example, manufacturing a lithium-ion secondary battery according to the inventive method for manufacturing a lithium-ion secondary battery, described below, and taking out the negative electrode from the manufactured lithium-ion secondary battery. The method for manufacturing the inventive negative electrode is not limited thereto.

<Lithium-Ion Secondary Battery>

The inventive lithium-ion secondary battery comprises the inventive negative electrode, a positive electrode, and a non-aqueous electrolyte liquid. The inventive lithium-ion secondary battery may further have other members such as, for example, a separator that separates the positive electrode from the negative electrode. The inventive lithium-ion secondary battery may also be called as a non-aqueous electrolyte secondary battery.

Next, an example of a laminated film-type lithium-ion secondary battery will be described as a specific example of the inventive lithium-ion secondary battery. The inventive lithium-ion secondary battery is not limited to the following specific example.

[Structure of Laminated Film-Type Lithium-Ion Secondary Battery]

In a laminated film-type lithium-ion secondary battery 30 illustrated in FIG. 2, a wound electrode assembly 31 is mainly housed inside a sheet-like exterior member 35. This wound electrode assembly 31 has the separator interposed between the positive electrode and the negative electrode, which are wound. In some cases, a stack having the separator between the positive electrode and the negative electrode is housed without winding. In any of the electrode assemblies, a positive electrode lead 32 is attached to the positive electrode, and a negative electrode lead 33 is attached to the negative electrode. An outermost periphery of the electrode assembly is protected with a protective tape.

The positive electrode lead 32 and the negative electrode lead 33 are drawn out in one direction from an inside to outside of the exterior member 35, for example. The positive electrode lead 32 is formed with a conductive material such as, for example, aluminum. The negative electrode lead 33 is formed with a conductive material such as, for example, nickel and copper.

The exterior member 35 is, for example, a laminated film in which a fusion layer, a metal layer, and a surface-protective layer are laminated in this order. In this laminated film, two of the films are bonded to each other at outer peripheries of the fusion layers thereof by fusion or via an adhesive so that each of the fusion layers is opposite to the electrode assembly 31. The portion to be fused is, for example, a film of polyethylene, polypropylene, etc., and the metal portion is an aluminum foil, etc. The protective film is of, for example, nylon.

Between the exterior member 35 and each of the positive electrode lead 32 and the negative electrode lead 33, an adhesion film 34 is inserted in order to prevent penetration of outside air. A material thereof is, for example, polyethylene, polypropylene, or a polyolefin resin.

Hereinafter, each member will be described.

[Positive Electrode]

The positive electrode has, for example, a positive electrode active material layer on both surfaces or one surface of a positive electrode current collector, similarly to the negative electrode 10 in FIG. 10.

The positive electrode current collector is formed with a conductive material such as aluminum, for example.

The positive electrode active material layer contains any one or two or more of positive electrode materials that can occlude and release lithium ions, and may contain other materials such as a positive electrode binding agent, a positive electrode conductive auxiliary, and a dispersant, depending on the design. In this case, details of the positive electrode binding agent and the positive electrode conductive auxiliary are same as, for example, the aforementioned negative electrode binding agent and negative electrode conductive auxiliary.

The positive electrode material is desirably a lithium-containing compound. Examples of this lithium-containing compound include: a composite oxide composed of lithium and a transition metal element; or a phosphate compound containing lithium and a transition metal element. Among these positive electrode materials, a compound containing at least one or more of nickel, iron, manganese, and cobalt is preferable. The chemical formula thereof is represented as $Li_xM_1O_2$ or $Li_yM_2PO_4$, for example. In the formulae, $M_1$ and $M_2$ represent at least one or more of the transition metal elements. The values "x" and "y" exhibit different values depending on the state of charge and discharge state of the battery, and are typically numbers satisfying $0.05 \leq x \leq 1.10$ and $0.05 \leq y \leq 1.10$.

Examples of the composite oxide containing lithium and the transition metal element include lithium-cobalt composite oxide ($Li_xCoO_2$), lithium-nickel composite oxide ($Li_xNiO_2$), and lithium-nickel-cobalt composite oxide. Examples of the lithium-nickel-cobalt composite oxide include lithium-nickel-cobalt-aluminum composite oxide (NCA) and lithium-nickel-cobalt-manganese composite oxide (NCM).

Examples of the phosphate compound containing lithium and the transition metal element include lithium iron phosphate compound ($LiFePO_4$) and lithium iron manganese phosphate compound ($LiFe_{1-u}Mn_uPO_4$ ($0 < u < 1$)). By using these positive electrode materials, a high battery capacity and excellent cycle characteristics can be obtained.

[Negative Electrode]

The negative electrode is the inventive negative electrode described above.

[Separator]

The separator separates lithium metal or the positive electrode from the negative electrode, and enables lithium ions to permeate while preventing current short circuit due to contacting of both the electrodes. This separator is formed with a porous film composed of, for example, a synthetic resin or a ceramic. The separator may have a laminated structure in which two types or more of the porous films are stacked. Examples of the synthetic resin include polytetrafluoroethylene, polypropylene, and polyethylene.

[Non-Aqueous Electrolyte Liquid]

At least a part of the active layer or the separator is immersed with a liquid non-aqueous electrolyte (non-aqueous electrolyte liquid). In this non-aqueous electrolyte liquid, an electrolyte salt is dissolved in a solvent, and other materials such as an additive may be contained.

As the solvent, a non-aqueous solvent may be used, for example. Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, at least one or more of ethylene carbonate, propylene carbonate, dimethyl carbonate, diethyl carbonate, and ethyl methyl carbonate are desirably used. This is because better characteristics can be obtained. In this case, combination of: a high-viscosity solvent such as ethylene carbonate and propylene carbonate; and a low-viscosity solvent such as dimethyl carbonate, ethyl methyl carbonate, and diethyl carbonate can yield more advantageous characteristics. This is because dissociation of the electrolyte salt and ion mobility are increased.

When an alloy-type negative electrode is used, the solvent desirably contains at least one of a halogenated chain carbonate ester or a halogenated cyclic carbonate ester. In this manner, a stable coating can be formed on the surface of the negative electrode active material during charge and discharge, particularly during charge. Here, the halogenated chain carbonate ester refers to a chain carbonate ester having a halogen as a constituent element (at least one hydrogen is substituted with a halogen atom). The halogenated cyclic carbonate ester refers to a cyclic carbonate ester having a halogen as a constituent element (that is, at least one hydrogen is substituted with a halogen atom).

A type of the halogen atom is not particularly limited, but preferably fluorine. This is because a better coating is formed compared with other halogens. A larger number of the halogen atoms is more desirable. This is because the obtained coating is more stable, and a decomposition reaction of the electrolyte liquid is inhibited.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-one and 4,5-difluoro-1,3-dioxolan-2-one.

As a solvent additive, a cyclic carbonate ester having an unsaturated carbon bond is preferably contained. This is because the stable coating can be formed on the negative electrode surface during charge and discharge, and the decomposition reaction of the electrolyte liquid can be inhibited. Examples of the unsaturated carbon bond cyclic carbonate ester include vinylene carbonate or vinylethylene carbonate.

As the solvent additive, sultone (cyclic sulfonate ester) is preferably contained. This is because the chemical stability of the battery is improved. Examples of the sultone include propane sultone and propene sultone.

Furthermore, the solvent preferably contains an acid anhydride. This is because chemical stability of the electrolyte liquid is improved. Examples of the acid anhydride include propanedisulfonic anhydride.

The electrolyte salt may contain any one or more of a light metal salt such as a lithium salt, for example. Examples of the lithium salt include lithium hexafluorophosphate ($LiPF_6$) and lithium tetrafluoroborate ($LiBF_4$).

A content of the electrolyte salt is preferably 0.5 mol/kg or more and 2.5 mol/kg or less relative to the solvent. This is because high ion conductivity can be obtained.

The non-aqueous electrolyte liquid preferably comprises:

a non-aqueous solvent;
an electrolyte salt dissolved in the non-aqueous solvent; and
a silane compound represented by the following general formula (2),

$$Si(R^1)_l(R^2)_m(R^3)_n(R^4)_{4-l-m-n} \qquad (2)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$.

In this case, the aforementioned materials may be used as the non-aqueous solvent and the electrolyte salt.

Hereinafter, the silane compound represented by the general formula (2) will be described in more detail.

The silane compound is a silane compound having at least one or more alkenyl groups and at least one or more arylethynyl groups.

In the general formula (2), $R^1$ represents an alkenyl group having 2 to 20, preferably 2 to 10, and more preferably 2 to 5, carbon atoms.

Specific examples of the alkenyl group of $R^1$ include: linear alkenyl groups, such as a vinyl group, an n-propenyl group, an n-butenyl group, an n-pentenyl group, an n-hexenyl group, an n-heptenyl group, an n-octenyl group, an n-nonenyl group, an n-decenyl group, an n-undecenyl group, and an n-dodecenyl group; and branched alkenyl groups, such as an isopropenyl group, an isobutenyl group, an isopentenyl group, an isohexenyl group, an isoheptenyl group, an isooctenyl group, an isononyl group, an isodecenyl group, and an isoundecyl group.

Among these, a vinyl group and an n-propenyl group are preferable, from the viewpoint of sufficient improvement of the battery characteristics.

In the general formula (2), $R^2$ represents a substituted or unsubstituted arylethynyl group having 8 to 20, preferably 8 to 16, and more preferably 8 to 12, carbon atoms. A part or all of hydrogen atoms in an aryl group may be substituted with a hydrocarbon group. Specific examples of the substituent include: alkyl groups, such as a methyl group and an ethyl group; alkenyl groups, such as a vinyl group and an n-propenyl group; and alkynyl groups, such as an ethynyl group and a 1-propynyl group.

Specific examples of the arylethynyl group of $R^2$ include: arylethynyl groups in which a hydrogen atom in the aryl group is substituted with an alkyl group, such as a 2-methylphenylethynyl group, a 3-methylphenylethynyl group, a 4-methylphenylethynyl group, a 2-ethylphenylethynyl group, a 3-ethylphenylethynyl group, a 4-ethylphenylethynyl group, a 3-acenaphthenyl group, a 4-acenaphthenyl group, and a 5-acenaphthenyl group; arylethynyl groups in which a hydrogen atom in the aryl group is substituted with an alkenyl group, such as a 2-vinylphenylethynyl group, a 3-vinylphenylethynyl group, and a 4-vinylphenylethynyl group; arylethynyl groups in which a hydrogen atom in the aryl group is substituted with an alkynyl group, such as a 2-ethynylphenylethynyl group, a 3-ethynylphenylethynyl group, and a 4-ethynylphenylethynyl group; and unsubstituted arylethynyl groups, such as a phenylethynyl group, a 1-naphtylethynyl group, a 2-naphthylethynyl group, a 1-anthracenylethynyl group, 2-anthracenylethynyl group, and 9-anthracenylethynyl group.

Among these, preferable from the viewpoint of sufficient improvement of the battery characteristics are: the unsubstituted arylethynyl groups such as a phenylethynyl group; and the arylethynyl groups substituted with the alkyl group such as a 4-methylphenylethynyl group and a 4-ethylphenylethynyl group. A 4-methylphenylethynyl group and a phenylethynyl group are particularly preferable.

In the general formula (2), $R^3$ represents an alkyl group having 1 to 20, preferably 1 to 10, and more preferably 1 to 4, carbon atoms.

Specific examples of the alkyl group of $R^3$ include: linear alkyl groups, such as a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, and an n-dodecyl group; and branched alkyl groups, such as an isopropyl group, an isobutyl group, a sec-butyl group, a tert-butyl group, an isopentyl group, a neopentyl group, an isohexyl group, an isoheptyl group, an isooctyl group, a tert-octyl group, an isononyl group, an isodecyl group, and an isoundecyl group.

Among these, a methyl group, an ethyl group, and an n-propyl group are preferable from the viewpoint of sufficient improvement of the battery characteristics.

In the general formula (2), $R^4$ represents an alkynyl group having 2 to 20, preferably 2 to 10, and more preferably 2 to 5, carbon atoms.

Specific examples of the alkynyl group of $R^4$ include: linear alkynyl groups, such as an ethynyl group, a 1-propynyl group, a 1-butynyl group, a 1-pentynyl group, a 1-hexynyl group, a 1-heptynyl group, a 1-octynyl group, a 1-nonynyl group, a 1-decynyl group, a 1-undecynyl group, and a 1-dodecynyl group; and branched alkynyl groups, such as a 3-methyl-1-butynyl group, a 3,3-dimethyl-1-butynyl group, a 3-methyl-1-pentynyl group, a 4-methyl-1-pentynyl group, a 3,3-dimethyl-1-pentynyl group, a 3,4-dimethyl-1-pentynyl group, and a 4,4-dimethyl-1-pentynyl group.

Among these, an ethynyl group, a 1-propynyl group, and a 1-butynyl group are preferable from the viewpoint of sufficient improvement of the battery characteristics.

In the general formula (2), "l" and "m" each independently represent an integer of 1 to 3, "n" represents an integer of 0 to 2, and "l", "m", and "n" represent integers satisfying $2 \leq l+m+n \leq 4$. From the viewpoint of sufficient improvement of the battery characteristics, "l" and "m" preferably each independently represent an integer of 1 to 3, "n" preferably represent 0 to 1, and "l", "m", and "n" preferably satisfy l+m+n = 4 in the general formula (2).

Specific examples of the silane compound represented by the general formula (2) include phenylethynyltrivinylsilane, bis(phenylethynyl)divinylsilane (PEDVS), tris(phenylethynyl)vinylsilane, 4-methylphenylethynyltrivinylsilane, bis(4-methylphenylethynyl)divinylsilane, tris(4-methylphenylethynyl)vinylsilane, 4-methoxyphenylethynyltrivinylsilane, bis(4-methoxyphenylethynyl)divinylsilane, tris(4-methoxyphenylethynyl)vinylsilane, 4-fluorophenylethynyltrivinylsilane, bis(4-fluorophenylethynyl)divinylsilane, tris(4-fluorophenylethynyl)vinylsilane, phenylethynylmethyldivinylsilane, bis(phenylethynyl)methylvinylsilane (PEMVS), 4-methylphenylethynylmethyldivinylsilane, bis(4-methylphenylethynyl)methylvinylsilane, 4-methoxyphenylethynylmethyldivinylsilane, bis(4-methoxyphenylethynyl)methylvinylsilane, 4-fluorophenylethynylmethyldivinylsilane, bis(4-fluorophenylethynyl)methylvinylsilane, phenylethynyldimethylvinylsilane, 4-methylphenylethynyldimethylvinylsilane, 4-methoxyphenylethynyldimethylvinylsilane, 4-fluorophenylethynyldimethylvinylsilane, ethynylphenylethynylmethylvinylsilane, ethynyl-4-methylphenylethynylmethylvinylsilane, ethynyl-4-methoxyphenylethynylmethylvinylsilane, and ethynyl-4-fluorophenylethynylmethylvinylsilane.

A method for synthesizing the silane compound represented by the general formula (2) is not particularly limited. The silane compound represented by the general formula (2) can be obtained by, for example, a reaction between: a vinylhalosilane; and an arylethynylmagnesium halide or an arylethynyllithium. For example, methylvinyldichlorosilane and 4-fluorophenylethynylmagnesium chloride are reacted with each other to obtain bis(4-fluorophenylethynyl)methylvinylsilane.

Such a silane compound can be decomposed within a negative electrode potential range of 0.4 V to 0.5 V vs Li/Li$^+$ to change to the composite coating containing Si, O, C, and H on the outermost surfaces of the negative electrode active material particles. The composite coating exhibits negative secondary ion peaks of SiHO$_3^-$, SiO$_2$CH$_3^-$, and/or SiOCH$_3^-$ in the TOF-SIMS spectrum.

The Li silicate in the bulk is necessarily converted accompanied with charge and discharge, but the negative electrode having such a composite coating exhibiting the above peaks in the TOF-SIMS spectrum inhibits excessive decomposition of the non-aqueous electrolyte liquid, which occurs during the silicate conversion, and thereby the stable state can be retained.

A content of the silane compound in the non-aqueous electrolyte liquid is preferably 0.1 mass% to 5.0 mass%, more preferably 0.1 mass% to 4.0 mass%, and further preferably 0.1 mass% to 2.0 mass% from the viewpoint of sufficient improvement of battery performance.

Qualitative and quantitative analysis of each component in the non-aqueous electrolyte liquid can be performed by, for example, gas chromatography mass spectrometry (GC/MS), etc.

<Method for Manufacturing Lithium-Ion Secondary Battery>

Next, the inventive method for manufacturing a lithium-ion secondary battery will be described.

Manufactured by the inventive method for manufacturing a lithium-ion secondary battery is a lithium-ion secondary battery comprising a negative electrode containing negative electrode active material particles, a positive electrode, and a non-aqueous electrolyte liquid.

Here, the negative electrode active material particles is to be particles containing silicon oxide particles coated with a carbon layer, and the silicon oxide particles contain Li$_2$SiO$_3$ in at least a part thereof.

The non-aqueous electrolyte liquid is to be a liquid comprising: a non-aqueous solvent; an electrolyte salt dissolved in the non-aqueous solvent; and the silane compound represented by the general formula (2).

The inventive manufacturing method comprises assembling a battery unit comprising the negative electrode containing the negative electrode active material particles, the positive electrode, and the non-aqueous electrolyte liquid.

In assembling the battery unit, preferably used is the negative electrode containing the negative electrode active material particles, wherein, before the negative electrode active material particles are charged and discharged, the negative electrode active material particles have a peak derived from a Si (111) crystal plane obtained by X-ray diffraction using Cu-K$\alpha$ ray, a crystallite size corresponding to the crystal plane is 5.0 nm or less, and a ratio A/B of an intensity A of the peak derived from the Si (111) crystal plane relative to an intensity B of a peak derived from a Li$_2$SiO$_3$ (111) crystal plane satisfies the following formula (1),

$$0.4 \leq A/B \leq 1.0 \quad ...(1).$$

Such negative electrode active material particles can exhibit high slurry stability without impairing easiness of conversion from Li$_2$SiO$_3$ into Li$_4$SiO$_4$. Thus, by using the negative electrode containing such negative electrode active material particles, more excellent battery characteristics can be achieved.

In addition to the positive electrode, the negative electrode, and the non-aqueous electrolyte liquid, the battery unit assembled in this step may further comprise members that can be contained in the inventive lithium-ion secondary battery such as, for example, an exterior member, a separator, a positive electrode lead, and a negative electrode lead.

About other details of the negative electrode, the positive electrode, and the non-aqueous electrolyte liquid, and details of the other members, see the description on the inventive lithium-ion secondary battery.

The inventive manufacturing method further comprises forming a coating on a surface of the negative electrode active material particles by charging the battery unit at least once.

By charging the battery unit produced in the previous step at least once, the silane compound represented by the general formula (2) is decomposed on the outermost surfaces of the negative electrode active material particles to cover the outermost surfaces of the negative electrode active material particles with the composite coating containing Si, O, C, and H.

In forming the coating, the battery unit is preferably charged so that a potential of the negative electrode is within a range of 0.4 V to 0.5 V vs Li/Li$^+$.

By forming the coating at such a negative electrode potential, a better coating can be obtained.

According to the inventive manufacturing method as above, the inventive lithium-ion secondary battery can be manufactured. However, the method for manufacturing the inventive lithium-ion secondary battery is not limited to the inventive manufacturing method.

The inventive negative electrode can also be obtained by taking out the negative electrode from the lithium-ion secondary battery thus manufactured.

Since the inventive negative electrode contains the composite coating formed by charge once or more, the outermost surfaces of the negative electrode active material particles are covered with the composite coating containing Si, O, C, and H. When the TOF-SIMS spectrum of the surface of the negative electrode active material particles has at least one peak of the peak attributed to $SiHO_3^-$, the peak attributed to $SiO_2CH_3^-$, and the peak attributed to $SiOCH_3^-$, it can be said that the negative electrode was charged at least once.

EXAMPLES

Hereinafter, the present invention will be specifically described by using Examples and Comparative Examples, but the present invention is not limited thereto.

(Example 1)

[Production of Negative Electrode]

Provided were silicon-based negative electrode active material particles (KSC-7130: silicon oxide particles containing $Li_2SiO_3$ and coated with a carbon layer; median diameter 6.5 $\mu$m; manufactured by Shin-Etsu Chemical Co., Ltd., see Journal of Power Sources 450 (2020) 227699). These silicon-based negative electrode active material particles were analyzed by XRD. The following Table 1 shows, in the silicon-based negative electrode active material particles, a ratio A/B of an intensity A of a peak (appearing near 2θ = 28.4°) derived from a Si (111) crystal plane relative to an intensity B of a peak (appearing within a range of 2θ = 17° to 21°) derived from a $Li_2SiO_3$ (111) crystal plane. The analysis by XRD demonstrated that, in the silicon-based negative electrode active material particles prepared in Example 1, Si had low crystallinity and was substantially amorphous.

The provided silicon-based negative electrode active material particles, graphite, a conductive auxiliary 1 (carbon nanotube, CNT), a conductive auxiliary 2 (carbon fine particles having a median diameter of approximately 50 nm), sodium polyacrylate, and carboxymethylcellulose (hereinafter, referred to as CMC) were mixed at a dry mass ratio of 9.3 : 83.7 : 1 : 1 : 4 : 1, and then the mixture was diluted with pure water to prepare a negative electrode mixture slurry.

As a negative electrode current collector, an electrolytic copper foil with 15 um in thickness was used. This electrolytic copper foil contained carbon and sulfur at each 70 mass-ppm. Finally, the negative electrode mixture slurry was applied on the negative electrode current collector, and dried in a vacuum atmosphere at 100°C for 1 hour. A deposition amount of a negative electrode active material layer per unit area (also referred to as "area density") on one surface of the negative electrode after the drying was 7.0 mg/cm$^2$.

[Preparation of Non-Aqueous Electrolyte Liquid]

Next, ethylene carbonate (EC) and dimethyl carbonate (DMC) were mixed as non-aqueous solvents, and then an electrolyte salt (lithium hexafluorophosphate: $LiPF_6$) was dissolved into this mixed solvent to prepare an non-aqueous electrolyte liquid. In this case, a composition of the solvent was EC : DMC = 30:70 at a volume ratio, and a content of the electrolyte salt was 1 mol/kg relative to the solvent. As additives, vinylene carbonate (VC) and fluoroethylene carbonate (FEC) were added at respectively 1.0 mass% and 2.0 mass%.

Into the prepared electrolyte liquid, bis(phenylethynyl)methylvinylsilane (PEMVS), which is one of the silane compounds represented by the general formula (2), was added at an amount of 2 mass% as an electrolyte liquid additive for forming a coating.

[Production of Coin Battery for Test]

Then, a coin battery for test was assembled as follows.

First, Li foil with 1 mm in thickness was punched to 16 mm in diameter, which then was adhered to an aluminum clad.

The negative electrode obtained by the above method was punched to 15 mm in diameter, which then was disposed opposite to the Li foil via a separator, the non-aqueous electrolyte liquid obtained by the above method was injected, and then a 2032 coin battery (diameter: 20.0 mm, thickness: 3.2 mm) being a non-aqueous electrolyte secondary battery for a first efficiency test was produced.

[Measurement of Initial Efficiency]

First, the produced coin battery for a first efficiency test was charged (first charge) at a charge rate of equivalently 0.03 C with a CCCV mode. The CV was 0 V, and the termination current was 0.04 mA. Then, the coin battery was CC-discharged (first discharge) at a discharge rate of similarly 0.03 C and a discharge termination voltage of 1.2 V.

For determining initial charge-and-discharge characteristics, the first efficiency was calculated.

The first efficiency was calculated with the formula represented by First efficiency (%) = (First discharge capacity / First charge capacity) $\times$ 100

[Manufacture of Non-Aqueous Electrolyte Secondary Battery]

From the obtained initial data, a counter positive electrode was designed so that a utilization rate of the negative electrode was 95%. The utilization rate was calculated based on the following formula from capacities of the positive and negative electrodes obtained from the counter electrode Li.

Utilization rate = (Positive electrode capacity - Negative electrode loss)/(Negative electrode capacity-Negative electrode loss) $\times$ 100

Based on this design, a positive electrode was produced. The positive electrode produced as above, and the aforementioned negative electrode and non-aqueous electrolyte liquid were used to assemble a battery unit.

The assembled battery unit was subjected to CCCV-charge for 1 hour at a cell potential point so that a negative electrode potential was 0.4 V to 0.5 V vs Li/Li$^+$. By virtue of this charge, a coating was formed on outermost surfaces of the negative electrode active material particles to manufacture a lithium-ion secondary battery of Example 1. In Example 1, three of the same batteries were manufactured (N=3).

(Example 2)

In Example 2, lithium-ion secondary batteries of Example 2 were manufactured in the same manner as in Example 1 except that, in the preparation of the non-aqueous electrolyte liquid, bis(phenylethynyl)divinylsilane (PEDVS) was used at an amount of 2 mass% instead of PEMVS.

(Comparative Example 1)

In Comparative Example 1, lithium-ion secondary batteries of Comparative Example 1 were manufactured in the same manner as in Example 1 except that, in the preparation of the non-aqueous electrolyte liquid, no PEMVS was used.

[Confirmation of Coating]

In each of Examples 1 and 2 and Comparative Example 1, one of the manufactured batteries was disassembled to take out the negative electrode, and the coating on the negative electrode surface was analyzed by TOF-SIMS.

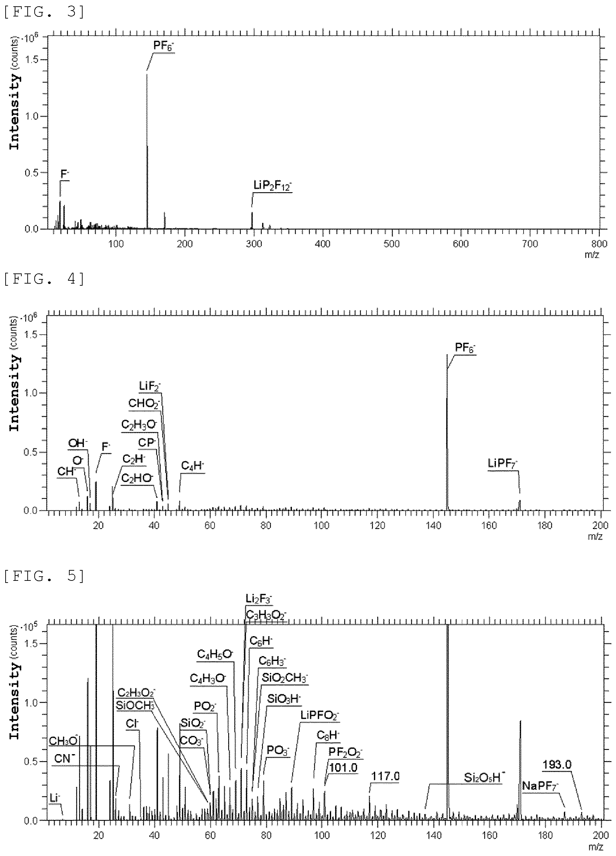

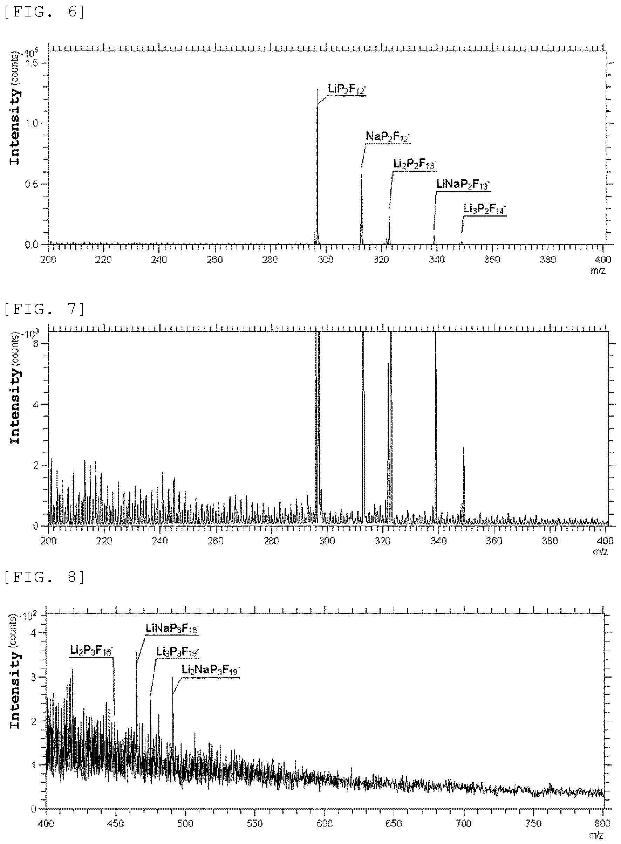

FIG. 3 to FIG. 8 show TOF-SIMS spectra of the surface of the negative electrode active material particles contained in the negative electrode of the lithium-ion secondary battery of Example 2. FIG. 4 to FIG. 8 are enlarged views of the spectrum in FIG. 3. As indicated in FIG. 5, the TOF-SIMS spectrum in Example 2 had a peak attributed to $SiHO_3^-$ (described as $SiO_3H^-$ in FIG. 5), a peak attributed to $SiO_2CH_3^-$, and a peak attributed to $SiOCH_3^-$. Although intensities were different from those of Example 2 as shown in the following Table 1, the TOF-SIMS spectrum in Example 1 also had these peaks. Meanwhile, as shown in Table 1, the TOF-SIMS spectrum in Comparative Example 1 did not have these peaks.

As above, in contrast to Comparative Example 1, which did not have the peaks derived from the surface coating, the TOF-SIMS spectra obtained in Examples 1 and 2 in which the silane compound represented by the general formula (2) was added into the non-aqueous electrolyte liquid as an additive had the peak attributed to $SiHO_3^-$, the peak attributed to $SiO_2CH_3^-$, and the peak attributed to $SiOCH_3^-$. Based on these peaks, generation of the composite coating containing Si, O, C, and H, and covering the outermost surfaces of the negative electrode active material particles were confirmed. In addition, the spectrum in which decomposition of the main solvent and the salt was inhibited was obtained in Examples 1 and 2, and a function as a protective film was confirmed.

[Cycle Characteristics Evaluation and Battery Inflation Evaluation]

The remained two batteries among the batteries manufactured in each Example were subjected to charge-and-discharge 500 times to obtain a state of a cell thickness and a battery retention rate at this time. The specific conditions are described below, and the results are shown in the following Table 1. The results of the battery characteristics are described as average values.

<Evaluation of Discharge Capacity Retention Rate after 500 Cycles>

The cycle characteristics were determined as below. To firstly stabilize the battery, under an atmosphere at 25°C, the battery was firstly charged and discharged at 0.2 C with two cycles to measure a discharge capacity at the 2nd cycle. The cycle characteristics were calculated from a discharge capacity at the 3rd cycle, and the battery test was stopped at the 500th cycle. The charge was performed at 0.7 C, and the discharge was performed at 0.5 C. In this time, the charge voltage was 4.3 V, the discharge termination voltage was 2.5 V, and the charge termination rate was 0.07 C.

<Increase Rate of Battery Thickness (Evaluation of Swelling)>

When the discharge capacity at the 2nd cycle was measured in the evaluation of the cycle characteristics, a thickness of an inflated portion of the battery was also measured. Thereafter, the battery was charged and discharged from the 3rd cycle to the 500th cycle under the above conditions, and a thickness of the battery after the 500 cycles was measured. Based on the thickness of the battery after the 2 cycles, an increase rate of the thickness of the battery after the 500 cycles due to increase in volume was determined.
It should be noted that the increase rate of the battery thickness was evaluated with a 543436-sized battery (thickness: 5.4 mm, width: 34 mm, and height: 36 mm). The thickness was measured at a center of a portion with a largest area.

(Examples 3 to 8)

In Example 3 to Example 5, lithium-ion secondary batteries of Example 3 to Example 5 were manufactured in the same manner as in Example 1 except that the amount of the added PEMVS was changed as shown in the following Table 1.
In Examples 6 to 8, lithium-ion secondary batteries of Example 6 to Example 8 were manufactured in the same manner as in Example 2 except that the amount of the added PEDVS was changed as shown in the following Table 1.
On the lithium-ion secondary batteries of Examples 3 to 8 and the negative electrodes contained therein, the analysis and the evaluation of the battery characteristics were performed as in Example 1. The results are shown in the following Table 1.
The amount of the silane compound as the additive was increased or decreased to analyze the coating in Examples 3 to 8 as noted above. Although observed was a tendency of a rather saturated state of the detected result of the component of the composite coating by addition at 2% or more, formation of the composite coating basically same as in Example 1 and Example 2 was confirmed.

(Examples 9 to 13)

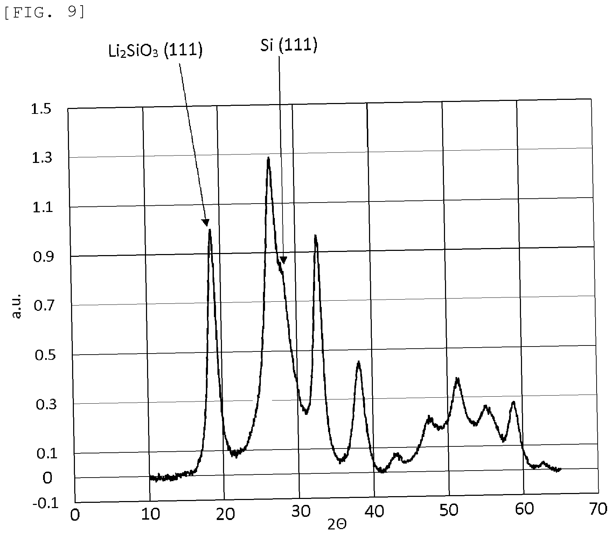

In Examples 9 to 13, the silicon-based negative electrode active material particles were subjected to an additional thermal treatment to change crystallinity of Si and Li silicate. The temperature was regulated within a range of 600 to 700°C.
The silicon-based negative electrode active material particles used in Examples 9 to 13 before charge and discharge were analyzed by XRD. FIG. 9 shows the XRD chart of the silicon-based negative electrode active material particles used in Example 12 before charge and discharge.
The following Table 1 shows, in each of the negative electrode active material particles, the ratio A/B of the intensity A of the peak (appearing near $2\theta = 28.4°$) derived from the Si (111) crystal plane relative to the intensity B of the peak (appearing within a range of $2\theta = 17°$ to $21°$) derived from the $Li_2SiO_3$ (111) crystal plane.
A crystallite size corresponding to the Si (111) crystal plane was calculated from the peak derived from the Si (111) crystal plane based on Scherrer's equation. The results are shown in the following Table 1.
In Examples 9 to 13, lithium-ion secondary batteries of Example 9 to Example 13 were manufactured in the same manner as in Example 2 except that the negative electrode active material particles subjected to the additional thermal treatment as above were used.
On the lithium-ion secondary batteries of Examples 9 to 13 and the negative electrodes contained therein, the analysis and the evaluation of the battery characteristics were performed as in Example 1. The results are shown in the following Table 1.

The obtained results indicated that generation of more Si crystal phases (a larger ratio A/B), more proceeded decomposition of the additive.

(Examples 14 to 19)

In Examples 14 to 19, lithium-ion secondary batteries of Example 14 to Example 19 were manufactured in the same manner as in Example 2 except that the median diameter of the silicon-based negative electrode active material particles was changed as shown in the following Table 1.

On the lithium-ion secondary batteries of Examples 14 to 19 and the negative electrodes contained therein, the analysis and the evaluation of the battery characteristics were performed as in Example 1. The result are shown in the following Table 1.

As shown in Table 1, as a result of investigation with change in the particle diameter of the silicon-based negative electrode active material particles, a smaller particle diameter resulted in higher intensities of the peaks derived from the composite coating in the TOF-SIMS spectrum.

The silicon-based negative electrode active material particles used in Examples 14 to 19 were analyzed by XRD in the same manner as the silicon-based negative electrode active material particles used in Example 1. The results are also shown in the following Table 1.

[Table 1]

| | Battery characteristics evaluation | | Particle diameter (median diameter) of negative electrode active material particles [$\mu$m] | Silane compound | | Negative secondary ion peaks in TOF-SIMS spectrum | | | XRD | |
|---|---|---|---|---|---|---|---|---|---|---|
| | Capacity retention rate until 500 cycles [%] | Increase rate of thickness (Swelling) [%] | | Type | Additio n amount [mass%] | $SiHO_3^-$ | $SiO_2CH_3^-$ | $SiOCH_3^-$ | Peak intensity ratio A/B between Si (111) and $Li_2SiO_3$(111) | Si (111) |
| Comparative Example 1 | 74.5 | 20.5 | 6.5 | none | none | absent | absent | absent | 0.55 | amorphous |
| Example 1 | 82 | 16.7 | 6.5 | PEMVS | 2 | $6.01\times10^{-4}$ | $1.32\times10^{-3}$ | $5.25\times10^{-4}$ | 0.55 | amorphous |
| Example 2 | 85 | 10.5 | 6.5 | PEDVS | 2 | $1.05\times10^{-3}$ | $4.21\times10^{-4}$ | $2.79\times10^{-4}$ | 0.55 | amorphous |
| Example 3 | 81 | 17.4 | 6.5 | PEMVS | 0.5 | $1.51\times10^{-4}$ | $4.10\times10^{-4}$ | $1.05\times10^{-4}$ | 0.55 | amorphous |
| Example 4 | 81 | 17.2 | 6.5 | PEMVS | 1 | $3.20\times10^{-4}$ | $9.21\times10^{-4}$ | $2.48\times10^{-4}$ | 0.55 | amorphous |
| Example 5 | 82 | 16.2 | 6.5 | PEMVS | 3 | $4.85\times10^{-4}$ | $1.71\times10^{-3}$ | $6.55\times10^{-4}$ | 0.55 | amorphous |
| Example 6 | 82 | 14.8 | 6.5 | PEDVS | 0.5 | $1.99\times10^{-4}$ | $1.05\times10^{-4}$ | $7.5\times10^{-5}$ | 0.55 | amorphous |
| Example 7 | 83 | 13.5 | 6.5 | PEDVS | 1 | $6.25\times10^{-4}$ | $2.96\times10^{-4}$ | $1.25\times10^{-4}$ | 0.55 | amorphous |
| Example 8 | 84 | 10.2 | 6.5 | PEDVS | 3 | $1.88\times10^{-3}$ | $4.65\times10^{-4}$ | $2.94\times10^{-4}$ | 0.55 | amorphous |
| Example 9 | 80.5 | 15.5 | 6.5 | PEDVS | 2 | $2.55\times10^{-3}$ | $5.22\times10^{-4}$ | $3.33\times10^{-4}$ | 1.67 | 9.2 nm |
| Example 10 | 81 | 13.2 | 6.5 | PEDVS | 2 | $2.42\times10^{-3}$ | $4.90\times10^{-4}$ | $3.12\times10^{-4}$ | 1.02 | 5 nm |
| Example 11 | 82 | 12.2 | 6.5 | PEDVS | 2 | $2.10\times10^{-3}$ | $4.91\times10^{-4}$ | $3.08\times10^{-4}$ | 0.71 | 3.8 nm |
| Example 12 | 83 | 11.9 | 6.5 | PEDVS | 2 | $1.74\times10^{-3}$ | $4.55\times10^{-4}$ | $2.98\times10^{-4}$ | 0.67 | 2.2 nm |
| Example 13 | 84 | 11.1 | 6.5 | PEDVS | 2 | $1.55\times10^{-3}$ | $4.35\times10^{-4}$ | $2.83\times10^{-4}$ | 0.56 | 1.1 nm |
| Example 14 | 83 | 12.6 | 4 | PEDVS | 2 | $1.45\times10^{-3}$ | $4.77\times10^{-4}$ | $3.06\times10^{-4}$ | 0.55 | amorphous |
| Example 15 | 84 | 11.5 | 5.5 | PEDVS | 2 | $1.25\times10^{-3}$ | $4.55\times10^{-4}$ | $2.88\times10^{-4}$ | 0.55 | amorphous |
| Example 16 | 86.5 | 9.8 | 9 | PEDVS | 2 | $9.54\times10^{-4}$ | $3.88\times10^{-4}$ | $2.65\times10^{-4}$ | 0.55 | amorphous |

(continued)

| | Battery characteristics evaluation | | Particle diameter (median diameter) of negative electrode active material particles [$\mu$m] | Silane compound | | Negative secondary ion peaks in TOF-SIMS spectrum | | | XRD | |
|---|---|---|---|---|---|---|---|---|---|---|
| | Capacity retention rate until 500 cycles [%] | Increase rate of thickness (Swelling) [%] | | Type | Addition amount [mass%] | $SiHO_3^-$ | $SiO_2CH_3^-$ | $SiOCH_3^-$ | Peak intensity ratio A/B between Si (111) and $Li_2SiO_3$(111) | Si (111) |
| Example 17 | 87.8 | 9.5 | 12 | PEDVS | 2 | $9.24 \times 10^{-4}$ | $3.65 \times 10^{-4}$ | $2.22 \times 10^{-4}$ | 0.55 | amorphous |
| Example 18 | 87.7 | 9.3 | 15 | PEDVS | 2 | $8.81 \times 10^{-4}$ | $3.61 \times 10^{-4}$ | $2.09 \times 10^{-4}$ | 0.55 | amorphous |
| Example 19 | 83.2 | 9.9 | 17 | PEDVS | 2 | $7.05 \times 10^{-4}$ | $3.59 \times 10^{-4}$ | $2.07 \times 10^{-4}$ | 0.55 | amorphous |

From the results shown in Table 1, it is found that the lithium-ion secondary batteries of Examples 1 to 19, which have the inventive negative electrode containing the negative electrode active material particles having the outermost surfaces coated with the composite coating containing Si, O, C, and H, and in which the TOF-SIMS spectrum of the surface of the negative electrode active material particles has at least one of the peak attributed to $SiHO_3^-$, the peak attributed to $SiO_2CH_3^-$, and the peak attributed to $SiOCH_3^-$, can exhibit a high capacity retention rate, namely excellent cycle characteristics compared with Comparative Example 1 in which the TOF-SIMS spectrum does not have none of these peaks, and can also inhibit the battery inflation.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1. A negative electrode, comprising negative electrode active material particles, wherein

   the negative electrode was charged at least once,
   the negative electrode active material particles contain silicon oxide particles coated with a carbon layer, and
   the silicon oxide particles contain $Li_2SiO_3$ in at least a part thereof,
   outermost surfaces of the negative electrode active material particles are covered with a composite coating containing Si, O, C, and H, and
   a TOF-SIMS spectrum of a surface of the negative electrode active material particles obtained by time-of-flight secondary ion mass spectrometry has at least one negative secondary ion peak of a peak attributed to $SiHO_3^-$, a peak attributed to $SiO_2CH_3^-$, and a peak attributed to $SiOCH_3^-$.

2. The negative electrode according to claim 1, wherein, before the negative electrode active material particles are charged and discharged, the negative electrode active material particles have a peak derived from a Si (111) crystal plane obtained by X-ray diffraction using Cu-Ka ray, a crystallite size corresponding to the crystal plane is 5.0 nm or less, and a ratio A/B of an intensity A of the peak derived from the Si (111) crystal plane relative to an intensity B of a peak derived from a $Li_2SiO_3$ (111) crystal plane satisfies the following formula (1),

$$0.4 \leq A/B \leq 1.0 \quad ...(1).$$

3. The negative electrode according to claim 1 or 2, wherein a median diameter of the negative electrode active material particles is 5.5 um or more and 15 $\mu$m or less.

4. A lithium-ion secondary battery, comprising:

   the negative electrode according to any one of claims 1 to 3;
   a positive electrode; and
   a non-aqueous electrolyte liquid.

5. The lithium-ion secondary battery according to claim 4, wherein the non-aqueous electrolyte liquid comprises:

   a non-aqueous solvent;
   an electrolyte salt dissolved in the non-aqueous solvent; and
   a silane compound represented by the following general formula (2),

   $$Si(R^1)_l(R^2)_m(R^3)_n(R^4)_{4-l-m-n} \quad (2)$$

   wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$.

6. A method for manufacturing a lithium-ion secondary battery comprising: a negative electrode containing negative electrode active material particles; a positive electrode; and a non-aqueous electrolyte liquid, wherein

the negative electrode active material particles are to be particles containing silicon oxide particles coated with a carbon layer, the silicon oxide particles containing $Li_2SiO_3$ in at least a part thereof, the non-aqueous electrolyte liquid is to be a liquid comprising:

a non-aqueous solvent;
an electrolyte salt dissolved in the non-aqueous solvent; and
a silane compound represented by the following general formula (2),

$$Si(R^1)_l(R^2)_m(R^3)_n(R^4)_{4-l-m-n} \qquad (2)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$, and the method comprises steps of:

assembling a battery unit comprising the negative electrode, the positive electrode, and the non-aqueous electrolyte liquid; and
forming a coating on a surface of the negative electrode active material particles by charging the battery unit at least once.

7. The method for manufacturing a lithium-ion secondary battery according to claim 6, wherein, in assembling the battery unit, used is the negative electrode containing the negative electrode active material particles, wherein, before the negative electrode active material particles are charged and discharged, the negative electrode active material particles have a peak derived from a Si (111) crystal plane obtained by X-ray diffraction using Cu-Ka ray, a crystallite size corresponding to the crystal plane is 5.0 nm or less, and a ratio A/B of an intensity A of the peak derived from the Si (111) crystal plane relative to an intensity B of a peak derived from a $Li_2SiO_3$ (111) crystal plane satisfies the following formula (1),

$$0.4 \leq A/B \leq 1.0 \quad ...(1).$$

8. The method for manufacturing a lithium-ion secondary battery according to claim 6 or 7, wherein, in forming the coating on the surface of the negative electrode active material particles, the battery unit is charged so that a potential of the negative electrode is within a range of 0.4 V to 0.5 V vs $Li/Li^+$.

[FIG. 1]

[FIG. 2]

[FIG. 3]

[FIG. 4]

[FIG. 5]

[FIG. 6]

[FIG. 7]

[FIG. 8]

[FIG. 9]

## INTERNATIONAL SEARCH REPORT

| | International application No. |
|---|---|
| | **PCT/JP2022/025464** |

### A. CLASSIFICATION OF SUBJECT MATTER

***H01M 4/13***(2010.01)i; ***H01M 4/139***(2010.01)i; ***H01M 4/36***(2006.01)i; ***H01M 4/38***(2006.01)i; ***H01M 4/48***(2010.01)i; ***H01M 4/58***(2010.01)i; ***H01M 10/052***(2010.01)i; ***H01M 10/0567***(2010.01)i; ***H01M 10/058***(2010.01)i
FI:   H01M4/13; H01M4/36 C; H01M4/48; H01M4/36 A; H01M4/139; H01M10/052; H01M10/0567; H01M10/058; H01M4/58; H01M4/38 Z

According to International Patent Classification (IPC) or to both national classification and IPC

### B. FIELDS SEARCHED

Minimum documentation searched (classification system followed by classification symbols)

H01M4/13; H01M4/139; H01M4/36; H01M4/38; H01M4/48; H01M4/58; H01M10/052; H01M10/0567; H01M10/058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2008-181831 A (DENSO CORP) 07 August 2008 (2008-08-07)<br>    claims 1, 5, paragraphs [0011], [0018], compound no. 16 | 1-8 |
| Y | JP 2017-97952 A (SHIN-ETSU CHEMICAL CO., LTD.) 01 June 2017 (2017-06-01)<br>    claims 1, 7, paragraphs [0012], [0104]-[0015], tables 4-5, fig. 4 | 1-8 |
| Y | JP 2013-251097 A (TOYOTA INDUSTRIES CORP) 12 December 2013 (2013-12-12)<br>    claim 2, paragraphs [0010], [0040], [0084], test 1 | 1-8 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/025464**

| Patent document cited in search report | | | Publication date (day/month/year) | Patent family member(s) | Publication date (day/month/year) |
|---|---|---|---|---|---|
| JP | 2008-181831 | A | 07 August 2008 | (Family: none) | |
| JP | 2017-97952 | A | 01 June 2017 | US      2019/0097223      A1<br>claims 15, 21, paragraphs [0053], [0062]-[0063], tables 4-5, fig. 4<br>WO      2017/085911      A1<br>EP          3364483      A1<br>TW          201735422      A<br>CN          108292748      A<br>KR  10-2018-0080239      A | |
| JP | 2013-251097 | A | 12 December 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2006134719 A

**Non-patent literature cited in the description**

- *Journal of Power Sources,* 2020, vol. 450, 227699